# EUROPEAN PATENT SPECIFICATION

(11) **EP 3 974 695 B1**
(45) Date of publication and mention of the grant of the patent: **12.06.2024**
(21) Application number: 20290065.0
(22) Date of filing: 25.09.2020
(51) Int. Cl.: F16L 27/04, F16L 27/047, F16L 47/00, F16L 47/18, F02M 35/10, F16L 27/053, F16L 27/06

(54) **DUCT CONNECTION**
KANALANSCHLUSS
CONNEXION DE CONDUIT

(43) Date of publication of application: 30.03.2022
(73) Proprietor: MANN+HUMMEL GmbH, 71636 Ludwigsburg (DE)
(72) Inventor: Foulboeuf, Gwenael, 53260 Entrammes (FR); Manzella, Tony, 53000 Laval (FR); Bonnaud, Nicolas, 53960 Bonchamp (FR)
(74) Representative: Mann + Hummel Intellectual Property

(56) References cited:
- EP-A1- 2 832 984
- EP-A1- 3 699 473
- DE-A1- 2 547 755
- GB-A- 1 164 213
- US-A- 3 165 339

## Description

### Technical Field

The invention relates to an arrangement for fastening ducts for carrying a fluid. More particularly, the invention relates to a sealed connection between two ducts, such as pipes, valves and other flow devices, in particular of an internal combustion engine, particular of a motor vehicle or a stationary engine. More particularly, the invention relates to an arrangement for fastening ducts for carrying air, in particular charged air.

### Prior Art

In an internal combustion engine the parts of an air intake system are submitted to strong thermo-mechanical stress as the engine warms up, in particular at the level of the connecting elements between parts. For instance, the metallic outlet flange of a turbo compressor is classically fitted to the flange of a thermoplastic duct using a flat flange connection. Such a connection comprises screws which are placed through symmetrically disposed holes in the flange of each part and an axial sealing gasket such as, e.g., an O-ring, which is compressed between the flanges in order to seal the connection axially. In other words, the screws ensure mechanical assembly of the abutting flanges, and the axial sealing gasket is used to ensure the tightness of the flat flange connection of the metallic and plastic parts. Any deformation of the plastic flange of the duct, due in particular to pressure, temperature, mechanical stresses and creeping, generates a loss of sealing compression, and thus a risk of leakage.

EP 2832984 A1 discloses an improved connection arrangement between two ducts which are connected by a flange which can tolerate deformations of the connected ducts thus preventing leakages.

From EP 3 699 473 A1 an articulated connection device is known comprising first and second tubular components. The first and second components comprising respectively a first separable male articulation member provided with an end head in the form of a spherical segment and a second separable female articulation member provided with a complementary seat receiving in a movable manner inside the end head of the first member. The first member is configured to be housed at least partially within the first component and to be connected to the second component through the second member in that the second member is configured to be mounted around the second component.

Document DE 25 47 755 A1 shows a tube connector for jointing plastic pipes which may be out of alignment, and which do not require a fluid tight seal. The end of each tube is swollen into an arcuate bead, and the tubes overlap due to a slightly conical bore on the outer tube fitting over an arcuate chamfer on the rim of the other. A split coupling sleeve encloses the beaded ends and has doubly concave inner walls to allow relative angular movement. There is a central annular rectangular recess, and a stainless-steel strip connects the shells on one side. Transverse bolts connect the two halves together along the other edge.

US 3 165 339 A provides a swivel pipe joint of the ball-and-socket type comprises a tubular ball member having an external annular ball seat of spherical section formed thereon, a tubular socket member provided with a corresponding internal, annular socket seat surrounding and arranged substantially concentrically with the ball seat and also having an external retaining seat of spherical section formed thereon so as to be substantially concentric with the seat, and a resilient sealing ring having an annular sealing lip of spherical section extending between the seats to establish a substantially fluid-tight seal therebetween.

From GB 1 164 213 A a pipe union for connecting plastics pipes is known which comprises two partly-spherical cup-shaped members of glass fiber-reinforced plastics integral with or connected to pipes, a spherical core having a diametral bore received in the cup-shaped members, two retaining rings each fitting over the outside of one of the cup-shaped members and drawn together by bolts or springs, and sealing rings retained in annular grooves in the cup-shaped members to seal the joint.

The EP 2 832 984 A1 relates to a flange connection between a first duct and a second duct of an engine of a motor vehicle, comprising a first flange located on one end of said first duct, a second flange located on one end of said second duct and connecting means for axially tightening the first and second abutting flanges. Said flange connection comprises first sealing means for radially sealing said flange connection and interface means configured to be mounted on said first flange and to come into contact with the abutting face of said second flange, said interface means comprising second sealing means for radially sealing said flange connection.

### Disclosure of the Invention

It is an object of the invention to provide a duct connection between two ducts which allows for a relative rotational movement between the ducts when the connection is closed.

Another object of the invention is to provide a duct comprising such a duct connection.

Favorably, the claimed duct connection can be used for air ducts, particularly charged air ducts, particular at the air intake system of an internal combustion engine, between a turbo charger or compressor and an intake of an engine.

In a first aspect of the invention one object is achieved by a duct connection between a first duct and a second duct of an engine, in particular where at least one of the two ducts is made of a plastics material, comprising a flange located on one end of said second duct; a sealing means for sealing the connection between the two ducts; a bracket mounted to the first duct and fastened to the flange of the second duct; and a duct interface segment located on one end of said first duct, the interface segment being configured to cooperate with a complementary bracket interface segment.

According to the invention, the duct interface segment and the bracket interface segment have complementary contact surfaces, which are curved, in particular spherically shaped, in an axial direction. The curvature of the interface brackets in axial direction favorably locks the first duct axially in relation to the second duct.

In another aspect of the invention one object is achieved by a duct connection wherein the bracket comprises a ring-segment shaped body provided with a bracket interface segment for cooperating with a duct interface segment of a duct.

A duct connection between a first duct and a second duct, particularly of an internal combustion engine, is proposed, in particular where at least one of the two ducts is made of a plastics material, comprising a flange located on one end of said second duct; a sealing means for sealing the connection between the two ducts; a bracket mounted to the first duct and fastened to the flange of the second duct; and a duct interface segment located on one end of said first duct, the interface segment being configured to cooperate with a complementary bracket interface segment.

Advantageously, the ducts and the bracket may be made of plastics material, in particular thermoplastic material.

Advantageously, the bracket may be clipped on the first duct and fastened to the flange by fastening means such as screws. Sealing can be provided separately from the mechanical connection between the bracket and the second duct. The bracket locks the first duct in an axial direction.

By mounting, e.g. clipping, the bracket to the first duct and fastening, e.g. via screws, the bracket to the flange of the second duct the first duct is capable of rotational movements within certain limits even when the connection is closed, while relative axial movements between the ducts are blocked. Depending on the shape of the interface segments it may even be possible to allow for tilting one of the ducts with respect to the other one in certain limits of a tilt angle. For instance a tilt angle may be limited to not more than 15°, preferably by not more than 10°. A stopping means may be provided for limiting a tilt angle to any value as needed.

According to a favorable embodiment of the duct connection, the duct interface segment may be arranged on an outer face of the first duct and the bracket interface segment may be arranged on an inner face of the bracket. In particular, the duct interface segment may surround the end of the first duct. Additionally or alternatively, the bracket interface segment may surround a front end of the second duct. This facilitates the mounting of the ducts in the connection as the mutual rotational positions of the interface segments can be selected at random. Alternatively, one or both of the interface segments may be composed of one or more localized areas on the respective faces of the ducts.

According to a favorable embodiment of the duct connection, the flange may enclose a front end of the second duct in a circumferential direction providing a groove for receiving at least a part of the first duct. In particular, the groove may be provided for receiving a part of the duct interface segment of the first duct. Advantageously, the front end of the second duct may provide a sealing area and/or a sealing groove for the sealing means. For instance, the sealing means can be arranged between the outer face of the second duct and the inner face of the first duct.

According to a favorable embodiment of the duct connection, a front end of the second duct may be inserted into the first duct. Mounting of the ducts is facilitated.

According to the invention of the duct connection, the bracket encloses the first duct by an angle in a circumferential direction of less than 360°. The angle of enclosure must be managed by the raw material used for the bracket and the capacity of the bracket to accept a deformation during the assembly on the duct, which happens, however, only once time. The higher the angle the higher the risk of breakage. Nevertheless, if the angle is lower than 180°, there is a risk of pull off the bracket during lifetime. For instance, the angle may be close to 180°. Hence, a skilled person will choose the angle of enclosure appropriately. In one embodiment, for instance, the bracket may enclose the first duct in a circumferential direction by not more than 210°, preferably by at least 180°. Favorably, the bracket can be clipped on the first duct easily.

According to a favorable embodiment of the duct connection, the duct interface segment may be configured with a convex contact surface and the bracket interface segment may be configured with a concave contact surface. Alternatively, the duct interface segment may be configured with a concave contact surface and the bracket interface segment may be configured with a convex contact surface. By providing the duct interface segment with a convex contact surface and the bracket interface segment with a concave contact surface a tilt angle between the first and second duct can be achieved.

According to a favorable embodiment of the duct connection, the bracket may be made of plastics material, in particular of a thermoplastics material. The plastics material may be a thermoplastic material, e.g. polyamide or polypropylene, particularly filled with glasfibers and/or minerals.

According to a favorable embodiment of the duct connection, the sealing means may be arranged in a sealing groove of the second duct. In particular, the sealing means may comprise an annular seal. However, it is to be understood that various shapes and kinds of seals may be used, such as flat rings, lip seals can be used.

The sealing means may be sandwiched between the abutted front ends of the ducts. The sealing areas ensure axial and radial tightness and increased leakage resistance in the region of the junction of the connected ducts.

Sealing is achieved using a sealing gasket being fitted between the ducts. Such a connection is also easy to assemble and quickly detachable, and compatible with current flange designs for combustion engines, particular in the automotive industry.

According to a favorable embodiment of the duct connection, a stopping means is provided for limiting a relative tilt angle between the ducts to not more than 10° or any value as needed. For instance, as the second duct is inserted into the first duct, the front end of the second duct may serve as a stopping means. However it is to be understood that various stopping means can be provided.

The bracket may be made of plastics material, in particular of a thermoplastics material. The plastics material may be a thermoplastic material, e.g. polyamide or polypropylene, particularly filled with glasfibers and/or minerals. The bracket may be provided with an inner face having a curved shape in an axial direction. The bracket may have the form of a ring segment so that the bracket may enclose the first duct by an angle in a circumferential direction of less than 360°. The angle of enclosure must be managed by the raw material used for the bracket and the capacity of the bracket to accept a deformation during the assembly on the duct, which happens, however, only once time. The higher the angle the higher the risk of breakage. Nevertheless, if the angle is lower than 180°, there is a risk of pull off the bracket during lifetime. For instance, the angle may be close to 180°. In one embodiment, for instance, the bracket may enclose the first duct in a circumferential direction by not more than 210°, preferably by at least 180°. Favorably, the bracket can be clipped on the first duct easily.

According to another object of the invention, a duct comprising a duct connection is proposed with the duct connection between a first duct and a second duct of an engine, in particular where at least one of the two ducts is made of a plastics material, comprising a flange located on one end of said second duct; a sealing means for sealing the connection between the two ducts; a bracket mounted to the first duct and fastened to the flange of the second duct; and a duct interface segment located on one end of said first duct, the interface segment being configured to cooperate with a complementary bracket interface segment.

Favorably, the flange may be made of plastics material. Favorably, the bracket may be made of a plastics material. Favorably, one or both ducts may be made of a plastics material. The plastics material may be a thermoplastic material, e.g. polyamide or polypropylene, particularly filled with glass fibers and/or minerals.

### Brief Description of the Drawings

The present invention together with the above-mentioned and other objects and advantages may best be understood from the following detailed description of the embodiments, but not restricted to the embodiments, wherein is shown in:
- Figure 1: a perspective view of a part of a duct connection featuring a first duct and a bracket clipped on the first duct according to an embodiment of the invention;
- Figure 2: a perspective view of the bracket shown in Figure 1;
- Figure 3: in an exploded view the part of the duct connection of Figure 1;
- Figure 4: in a cut view a duct connection between two ducts according to an embodiment of the invention;
- Figure 5: in a cut view a detail of the duct connection of Figure 4.

### Detailed Description of the Drawings

In the drawings, like elements are referred to with equal reference numerals. The drawings are merely schematic representations, not intended to portray specific parameters of the invention. Moreover, the drawings are intended to depict only typical embodiments of the invention and therefore should not be considered as limiting the scope of the invention.

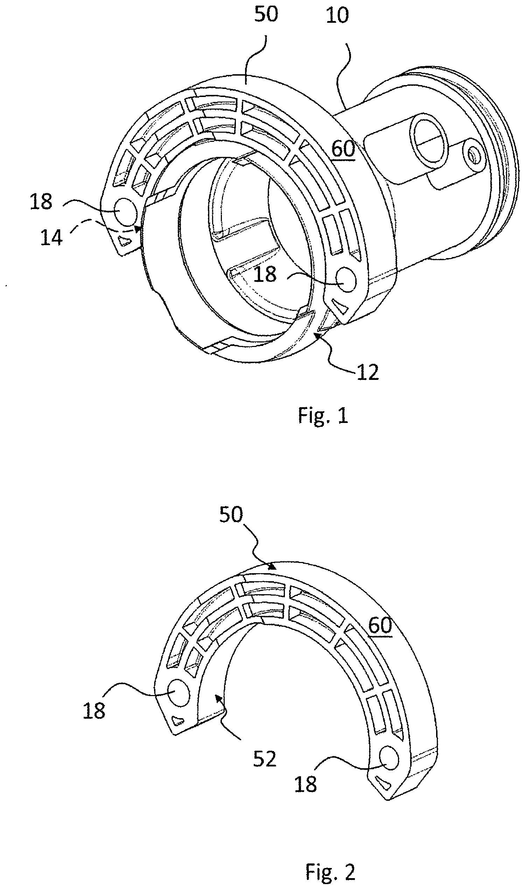

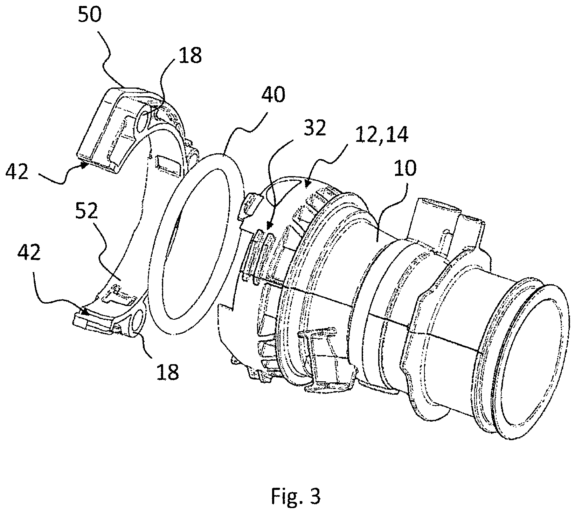

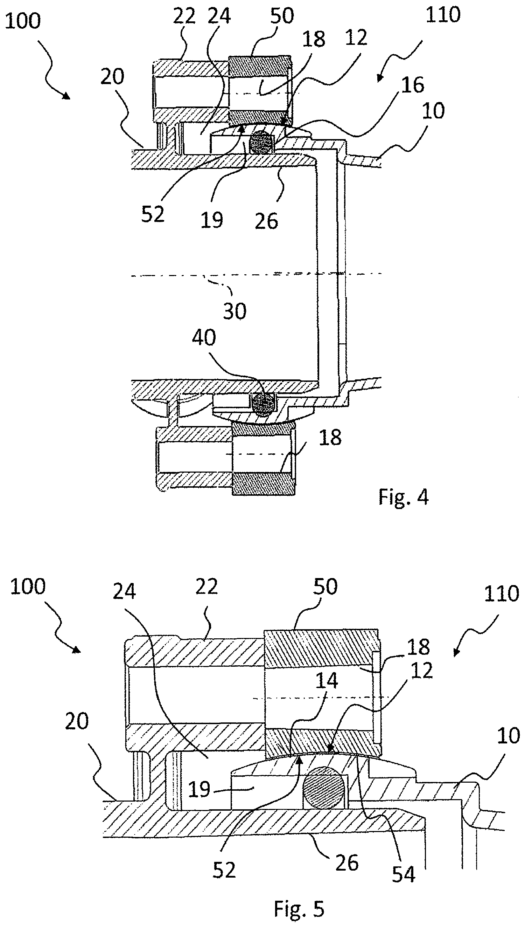

Figure 1 depicts in a perspective view a part of a duct connection 100 (Figure 5), featuring a first duct 10 and a bracket 50 clipped on the first duct 10 according to an embodiment of the invention. Figure 2 displays a perspective view of the bracket 50 shown in Figure 1. Figure 3 depicts an exploded view of the part of the duct connection of Figure 1 with the first duct 10, the bracket 50 and a sealing means 40, e.g. a toroidal ring in this embodiment.

In this embodiment, the bracket 50 encloses the first duct 10 in a circumferential direction by an angle close to 180°, so to be easily clipped onto the first duct 10. Of course, in other embodiments other angles of enclosure may be chosen. Preferably, the bracket 50 is made of plastics material, in particular of a thermoplastics material.

The bracket 50 comprises a ring-segment shaped body 60 provided with bracket interface segment 52. The bracket interface segment 52 is configured to cooperate with a duct interface segment 12 of the duct 10.

The duct interface segment 12 is located on one end of the first duct 10. The interface segment 12 is configured to cooperate with a complementary bracket interface segment 52. The duct interface segment 12 is arranged on an outer face of the first duct 10 and, in this embodiment, surrounds the end of the first duct 10. In order to limit a rotational movement between the two ducts 10, 20 (Figures 4, 5) when the axes of the ducts are aligned at least at their mutual interface region, stopping means 32 are provided on duct 10 as well as stopping means 42 on the bracket 50.

Figure 4 illustrates in a cut view a duct connection 100 between two ducts 10, 20 according to an embodiment of the invention. Figure 5 highlights in a cut view a detail of the duct connection 100 of Figure 4.

The duct connection 100 may be part of an air duct 110 of an internal combustion engine which consist of ducts made from plastics material.

In particular, the duct connection may comprise a first duct 10 as described in the Figures 1 to 3 comprising a bracket 50 and a duct interface segment 12. The second duct 20 provides an axially direction 30 which may be an axial direction of the first duct 10.

The second duct 20 comprises a flange 22 located on one end of said second duct 20, which encloses a front end 26 of the second duct 20 in a circumferential direction. A groove 24 is arranged between the inner face of the flange 22 and the outer face of the front end 26 for receiving at least a part of the first duct 10, in particular for receiving a part of the duct interface segment 12 of the first duct 10.

The front end 26 of the second duct 20 is inserted into the first bracket 10 so that the outer face of the front end 26 is radially spaced from the inner face of the outer face of the first duct 10, forming a groove 19. The groove 19 is configured for receiving a sealing means 40.

The sealing means 40 is provided for sealing the connection between the two ducts 10, 20 and may be a toroidal ring. The sealing means 40 provides radial sealing between the first duct 10 and the second duct 20 and may also provide axial sealing between the two ducts 10, 20. The first duct 10 comprises a step 16 at its inner face which reduces the aperture of the end of the first duct 10. The step 16 may serve as a sealing surface for the sealing means 40.

The bracket 50 is mounted, in particular clipped, to the first duct 10 and fastened to the flange 22 of the second duct 20. The bracket provides through holes 18 for receiving fastening means such as screws (not shown). For better stability, in particular metallic inserts (not shown) may be arranged in the through holes 18.

The duct interface segment 12 is located on one end of said first duct 10, the interface segment 12 being configured to cooperate with a complementary bracket interface segment 52.

The duct interface segment 12 and the bracket interface segment 52 have complementary contact surfaces 14, 54, which are curved, in particular spherically shaped, in axial direction 30.

The duct interface segment 12 is arranged on the outer face of the first duct 10. The bracket interface segment 52 is arranged on the inner face of the bracket 50.

In this embodiment the duct interface segment 12 is configured, in a radial direction, with a convex contact surface 14 and the bracket interface segment 52 is configured with a concave contact surface 54.

This allows for a tilt angle of a few degrees between the two ducts 10, 20, i.e. between the axial direction 30 of the second duct 20 and an axial direction of the first duct 10. The tilt angle may be limited by the tip of the front end 26 of the second duct 20 which serves as a stopping means for limiting the tilt angle.

In particular the duct interface segment 12 surrounds the end of the first duct 10 and the bracket interface segment 52 surrounds the front end 26 of the second duct 20.

Alternatively, in an embodiment not illustrated, the duct interface segment 12 may be configured, in radial direction, with a concave contact surface 14 and the bracket interface segment 52 may be configured with a convex contact surface 54.

### Reference Numbers

- 10: first duct
- 12: duct interface segment
- 14: contact surface
- 16: step
- 18: through hole
- 19: groove
- 20: second duct
- 22: flange
- 24: groove
- 26: front end
- 30: axial direction
- 32: stopping means
- 40: sealing means
- 42: stopping means
- 50: bracket
- 52: bracket interface segment
- 54: contact surface
- 60: body
- 100: duct connection
- 110: air duct

## Claims

1. A duct connection (100) between a first duct (10) and a second duct (20), in particular of an internal combustion engine, in particular where at least one of the two ducts (10, 20) is made of a plastics material, comprising
a flange (22) located on one end of said second duct (20),
a sealing means (40) for sealing the connection between the two ducts (10, 20);
a bracket (50) mounted to the first duct (10) and fastened to the flange (22) of the second duct (20); and
a duct interface segment (12) located on one end of said first duct (10), the interface segment (12) being configured to cooperate with a complementary bracket interface segment (52),
wherein the duct interface segment (12) and the bracket interface segment (52) have complementary contact surfaces (14, 54), which are curved, in particular spherically shaped, in an axial direction (30), **characterized in that** the bracket (50) encloses the first duct (10) by an angle in a circumferential direction by less than 360°.

2. The duct connection according to claim 1, wherein the duct interface segment (12) is arranged on an outer face of the first duct (10) and the bracket interface segment (52) is arranged on an inner face of the bracket (50), in particular wherein the duct interface segment (12) surrounds the end of the first duct (10) and/or the bracket interface segment (52) surrounds a front end (26) of the second duct (20).

3. The duct connection according to claim 1 or 2, wherein the flange (22) encloses a front end (26) of the second duct (20) in a circumferential direction providing a groove (24) for receiving at least a part of the first duct (10), in particular for receiving a part of the duct interface segment (12) of the first duct (10).

4. The duct connection according to any one of the preceding claims, wherein a front end (26) of the second duct (20) is inserted into the first duct (10).

5. The duct connection according to any one of the preceding claims, wherein the duct interface segment (12) is configured with a convex contact surface (14) and the bracket interface segment (52) is configured with a concave contact surface (54), or wherein the duct interface segment (12) is configured with a concave contact surface (14) and the bracket interface segment (52) is configured with a convex contact surface (54).

6. The duct connection according to any one of the preceding claims, wherein the bracket (50) is made of plastics material, in particular of a thermoplastics material.

7. The duct connection according to any one of the preceding claims, wherein the sealing means (40) is arranged in a sealing groove of the first duct (10), in particular wherein said sealing means (40) comprise an annular seal.

8. The duct connection according to any one of the preceding claims, wherein a stopping means is provided for limiting a relative tilt angle between the ducts (10, 20).

9. The duct connection according to any one of the preceding claims, wherein the bracket (50) comprises a ring-segment shaped body (60) provided with a bracket interface segment (52) for cooperating with a duct interface segment (12) of a duct (10).

10. A duct (110) comprising a duct connection (100) according to any one of the claims 1 to 8.

## Patentansprüche

1. Kanalanschluss (100) zwischen einem ersten Kanal (10) und einem zweiten Kanal (20), insbesondere von einer Brennkraftmaschine, insbesondere wobei mindestens einer der beiden Kanäle (10, 20) aus Kunststoffmaterial besteht, umfassend
einen an einem Ende des zweiten Kanals (20) angeordneter Flansch (22), ein Dichtungsmittel (40) zum Abdichten des Anschlusses zwischen den beiden Kanälen (10, 20);
eine an dem ersten Kanal (10) angebrachte und an dem Flansch (22) des zweiten Kanals (20) befestigte Halterung (50); und
ein an einem Ende des ersten Kanals (10) angeordnetes Kanalschnittstellensegment (12), wobei das Schnittstellensegment (12) so konfiguriert ist, dass es mit einem komplementären Halterungsschnittstellensegment (52) zusammenwirkt,
wobei das Kanalschnittstellensegment (12) und das Halterungsschnittstellensegment (52) komplementäre Anlageflächen (14, 54) haben, die in einer Axialrichtung (30) gekrümmt, insbesondere kugelförmig, sind, **dadurch gekennzeichnet, dass** die Halterung (50) den ersten Kanal (10) in einer Umfangsrichtung um einen Winkel von weniger als 360° umschließt.

2. Kanalanschluss nach Anspruch 1, wobei das Kanalschnittstellensegment (12) an einer Außenseite des ersten Kanals (10) und das Halterungsschnittstellensegment (52) an einer Innenseite des Halters (50) angeordnet ist, insbesondere wobei das Kanalschnittstellensegment (12) das Ende des ersten Kanals (10) umgibt und/oder das Halterungsschnittstellensegment (52) ein vorderes Ende (26) des zweiten Kanals (20) umgibt.

3. Kanalanschluss nach Anspruch 1 oder 2, wobei der Flansch (22) ein vorderes Ende (26) des zweiten Kanals (20) in einer Umfangsrichtung umschließt und eine Nut (24) zur Aufnahme mindestens eines Teils des ersten Kanals (10), insbesondere zur Aufnahme eines Teils des Kanalschnittstellensegments (12) des ersten Kanals (10), vorsieht.

4. Kanalanschluss nach einem der vorhergehenden Ansprüche, wobei ein vorderes Ende (26) des zweiten Kanals (20) in den ersten Kanal (10) eingeführt wird.

5. Kanalanschluss nach einem der vorhergehenden Ansprüche, wobei das Kanalschnittstellensegment (12) mit einer konvexen Anlagefläche (14) konfiguriert ist und das Halterungsschnittstellensegment (52) mit einer konkaven Anlagefläche (54) konfiguriert ist, oder wobei das Kanalschnittstellensegment (12) mit einer konkaven Anlagefläche (14) konfiguriert ist und das Halterungsschnittstellensegment (52) mit einer konvexen Anlagefläche (54) konfiguriert ist.

6. Kanalanschluss nach einem der vorhergehenden Ansprüche, wobei die Halterung (50) aus Kunststoffmaterial, insbesondere aus Thermoplast besteht.

7. Kanalanschluss nach einem der vorhergehenden Ansprüche, wobei das Dichtungsmittel (40) in einer Dichtnut des ersten Kanals (10) angeordnet ist, insbesondere wobei das Dichtungsmittel (40) eine Ringdichtung umfasst.

8. Kanalanschluss nach einem der vorhergehenden Ansprüche, wobei eine Anschlageinrichtung zur Begrenzung eines relativen Neigungswinkels zwischen den Kanälen (10, 20) vorgesehen ist.

9. Kanalanschluss nach einem der vorhergehenden Ansprüche, wobei die Halterung (50) einen ringsegmentförmigen Körper (60) umfasst, der mit einem Halterungsschnittstellensegment (52) zum Zusammenwirken mit einem Kanalschnittstellensegment (12) eines Kanals (10) versehen ist.

10. Kanal (110), umfassend einen Kanalanschluss (100) nach einem der Ansprüche 1 bis 8.

## Revendications

1. Raccord de conduit (100) entre un premier conduit (10) et un second conduit (20), notamment d'un moteur à combustion interne, notamment où au moins l'un des deux conduits (10, 20) est constitué d'une matière plastique, comprenant
une bride (22) localisée sur une extrémité dudit second conduit (20),
un moyen d'étanchéité (40) permettant d'étanchéifier le raccord entre les deux conduits (10, 20);
un étrier (50) monté au premier conduit (10) et fixé à la bride (22) du second conduit (20); et
un segment d'interface de conduit (12) disposé sur une extrémité dudit premier conduit (10), le segment d'interface (12) étant configuré pour coopérer avec un segment d'interface d'étrier (52) complémentaire,
dans lequel le segment d'interface de conduit (12) et le segment d'interface d'étrier (52) ont des surfaces de contact (14, 54) complémentaires qui sont courbées, notamment de forme sphérique, dans une direction axiale (30), **caractérisé en ce que** l'étrier (50) entoure le premier conduit (10) selon un angle dans une direction circonférentielle de moins de 360°.

2. Raccord de conduit selon la revendication 1, dans lequel le segment d'interface de conduit (12) est disposé sur une face externe du premier conduit (10) et le segment d'interface d'étrier (52) est disposé sur une face interne de l'étrier (50), notamment dans lequel le segment d'interface de conduit (12) entoure l'extrémité du premier conduit (10) et/ou le segment d'interface d'étrier (52) entoure une extrémité avant (26) du second conduit (20).

3. Raccord de conduit selon la revendication 1 ou 2, dans lequel la bride (22) entoure une extrémité avant (26) du second conduit (20) dans une direction circonférentielle fournissant une rainure (24) permettant de recevoir au moins une partie du premier conduit (10), notamment permettant de recevoir une partie du segment d'interface de conduit (12) du premier conduit (10).

4. Raccord de conduit selon l'une quelconque des revendications précédentes, dans lequel une extrémité avant (26) du second conduit (20) est insérée dans le premier conduit (10).

5. Raccord de conduit selon l'une quelconque des revendications précédentes, dans lequel le segment d'interface de conduit (12) est configuré avec une surface de contact (14) convexe et le segment d'interface d'étrier (52) est configuré avec une surface de contact (54) concave, ou dans lequel le segment d'interface de conduit (12) est configuré avec une surface de contact (14) concave et le segment d'interface d'étrier (52) est configuré avec une surface de contact (54) convexe.

6. Raccord de conduit selon l'une quelconque des revendications précédentes, dans lequel l'étrier (50) est constitué de matière plastique, notamment d'une matière thermoplastique.

7. Raccord de conduit selon l'une quelconque des revendications précédentes, dans lequel le moyen d'étanchéité (40) est agencé dans une rainure d'étanchéité du premier conduit (10), notamment dans lequel lesdits moyens d'étanchéité (40) comprennent un joint d'étanchéité annulaire.

8. Raccord de conduit selon l'une quelconque des revendications précédentes, dans lequel un moyen d'arrêt est fourni permettant de limiter un angle d'inclinaison relatif entre les conduits (10, 20).

9. Raccord de conduit selon l'une quelconque des revendications précédentes, dans lequel l'étrier (50) comprend un corps en forme de segment annulaire (60) pourvu d'un segment d'interface d'étrier (52) permettant de coopérer avec un segment d'interface de conduit (12) d'un conduit (10).

10. Conduit (110) comprenant un raccord de conduit (100) selon l'une quelconque des revendications 1 à 8.
